# FASCICULE DE BREVET EUROPEEN

(11) **EP 2 584 564 B1**
(45) Date de publication et mention de la délivrance du brevet: **17.12.2014**
(21) Numéro de dépôt: 12188705.3
(22) Date de dépôt: 16.10.2012
(51) Int. Cl.: G21D 1/00, B23D 59/00, B23Q 11/00, G21C 19/36

(54) **Procédé et dispositif de démantèlement d'une tuyauterie potentiellement contaminée**
Verfahren und Vorrichtung zum Abbau eines potenziell verseuchten Rohrleitungssystems
Method and device for dismantling a potentially contaminated pipe

(30) Priorité: 17.10.2011 FR 1159366
(43) Date de publication de la demande: 24.04.2013
(73) Titulaire: SIGEDI, 38970 Corps (FR)
(72) Inventeur: Gueydan, Henri-Guillaume, 38300 Bourgoin (FR)
(74) Mandataire: Grand, Guillaume

(56) Documents cités:
- EP-A1- 0 538 206
- FR-A1- 2 901 051
- FR-A1- 2 955 196
- US-A1- 2011 167 975

## Description

La présente invention concerne un procédé et un dispositif de démantèlement d'une tuyauterie potentiellement contaminée.

L'invention s'applique en particulier, mais de manière non limitative, au démantèlement de tuyauteries équipant des sites industriels, par exemple des centrales nucléaires. De manière plus générale, l'invention s'intéresse à la problématique de retirer, notamment par découpage, des tuyaux dont la face interne et/ou externe est couverte de dépôts potentiellement contaminés par des substances nocives pour l'environnement et/ou les opérateurs ayant à réaliser les opérations de démantèlement.

Actuellement, dans de telles circonstances, les opérations de démantèlement sont réalisées dans un sas spécialement installé à cette fin : ce sas doit être ventilé et maintenu en dépression, pour confiner les copeaux et poussières libérés lors des opérations de découpe de la tuyauterie. Bien entendu, les opérateurs portent des combinaisons et des masques de protection. Ainsi, la mise en place et l'utilisation de tels sas de confinement sont particulièrement fastidieuses et très onéreuses. De plus, les matériels constituant ces sas, ainsi que ceux utilisés à l'intérieur, tels que des échafaudages, doivent ensuite faire l'objet de précautions, en raison de leur contamination potentielle, ce qui représente des quantités de matériel significatives.

Une autre solution consiste à utiliser une manchette souple et hermétique, que l'on fixe de manière étanche autour d'un tuyau à démanteler, en ayant pris la précaution préalable de placer à l'intérieur de cette manchette tous les outils nécessaires à la préparation et à la découpe du tuyau : l'opérateur manipule alors ces outils depuis l'extérieur de la manchette. On comprend que de telles manipulations sont délicates, avec des risques importants que, par mégarde, les outils utilisés perforent la manchette. De plus, cette solution est en pratique irréalisable lorsque le tuyau à découper est situé en hauteur ou bien lorsqu'il s'étend à la verticale.

FR-A-2 955 196, provenant du même Demandeur, a proposé d'améliorer la situation décrite ci-dessus, en fournissant un procédé et un dispositif de démantèlement grâce auxquels, après avoir, à la fois, confiné un volume libre autour d'un tuyau à découper, à l'aide d'un boîtier ad hoc rapporté autour du tuyau, et obturé intérieurement le tuyau par un matériau expansible, introduit dans le tuyau à l'aide du boîtier précité, on introduit, à travers une paroi extérieure du boîtier, une lame de scie à l'intérieur du volume libre, jusqu'à l'appliquer sur le tuyau et ainsi découper le tronçon de ce tuyau obturé par le matériau expansé. Cette solution s'avère parfaitement satisfaisante en ce qui concerne le confinement des copeaux et poussières libérés lors de la découpe du tuyau. La présence du matériau expansée nécessite cependant certaines précautions pour les post-traitements de décontamination et/ou la mise au rebut du tuyau démantelé.

US-A-2011/167975, sur lequel est basé le préambule de la revendication 8, divulgue un dispositif de démantèlement, ainsi qu'une utilisation de ce dispositif, dans lesquels un boîtier de confinement intègre à demeure des membranes élastiques ou des éléments similaires, qui ceinturent localement un tuyau à découper et à évacuer.

Le but de la présente invention est de proposer une solution qui, de manière alternative à celles de FR-A-2 955 196 et US-A-2011/167975, est au moins tout autant commode et rapide à mettre en oeuvre, tout en facilitant le post-traitement de la tuyauterie démantelée.

A cet effet, l'invention a pour objet un procédé de démantèlement d'une tuyauterie potentiellement contaminée, tel que défini à la revendication 1.

L'invention a également pour objet un dispositif de démantèlement d'une tuyauterie potentiellement contaminée, tel que défini à la revendication 8.

Une des idées à la base de l'invention est de réaliser l'opération de découpe du tuyau, proprement dite, en la confinant, extérieurement au tuyau, dans un volume libre délimité par un boîtier rigide, rapporté de manière étanche, notamment grâce à des joints ou similaires, autour du tuyau. Ce boîtier, que l'on peut qualifier de cloche de confinement, assure un confinement statique au cours des opérations de découpe du tuyau, en quelque sorte par effet de « seconde peau ». En pratique, on peut prévoir un boîtier par diamètre de tuyau à démanteler ou bien l'ajout d'extensions pour réduire le diamètre intérieur effectif du boîtier, afin de garantir que le boîtier s'adapte parfaitement au tuyau à démanteler. Avantageusement, ce boîtier est utilisé en tant que support du ou des outils utilisés pour découper le tuyau ou bien au moins en tant que guide de positionnement de cet ou ces outils. Egalement à titre avantageux, un confinement dynamique du volume libre délimité par ce boîtier peut être prévu, en raccordant ce volume libre à un moyen d'aspiration d'air, le flux d'air ainsi inspiré permettant de capter, à proximité immédiate de la zone du tuyau découpée, les rejets et poussières engendrés par la découpe du tuyau. Les actions de découpage se faisant à l'intérieur du volume libre, le boîtier de confinement protège l'opérateur de tout risque de blessure. De plus, eu égard à la portabilité du boîtier, le dispositif de confinement selon l'invention peut être utilisé sur un tuyau s'étendant aussi bien à l'horizontale qu'à la verticale.

Par ailleurs, pour garantir que les copeaux et poussières, résultant de la découpe du tuyau et présents à titre résiduel à l'intérieur de ce tuyau, ne puissent être dispersés, en particulier lors de l'évacuation du tronçon du tuyau découpé, l'invention prévoit d'utiliser une manchette souple, telle qu'une manchette en vinyle, que l'on fixe de manière étanche sur l'extérieur du boîtier et sur l'extérieur de la partie du tuyau destinée à rester en place à l'issue du procédé de démantèlement, par opposition au tronçon du tuyau qui, après découpe, se retrouve séparé de cette partie de tuyau conservée puis est évacué. Grâce à sa souplesse, la manchette est prévue pour se déployer, sans rupture de ses fixations étanches avec le boîtier et avec la partie de tuyau conservée, lorsque le tronçon à évacuer est écarté de cette partie de tuyau conservée : la manchette recueille ainsi intérieurement tous les copeaux et poussières résiduels, libérés lors de la séparation des deux parties de tuyau. Pour finaliser le dégagement du tronçon à évacuer, l'invention prévoit d'étrangler hermétiquement la manchette entre les deux parties de tuyau précitées, puis de sectionner la zone d'étranglement de la manchette. Le tronçon à évacuer, qui est toujours lié au boîtier et dont l'extrémité récemment découpée est enveloppée par une partie de la manchette étranglée, peut alors être acheminé jusqu'à un site de post-traitement, tel qu'un sas de redécoupe, où le boîtier est déposé puis, avantageusement, contrôlé, décontaminé et finalement renvoyé sur le site de démantèlement pour être réutilisé lors d'une nouvelle mise en oeuvre du procédé selon l'invention. Bien entendu, on comprend que la partie de manchette étranglée, qui est restée fixée à la partie de tuyau conservée, peut avantageusement être laissée en place pour obturer hermétiquement l'extrémité libre de cette partie de tuyau conservée, en particulier lors de la réalisation subséquente d'une nouvelle mise en oeuvre du procédé pour démanteler à son tour cette partie de tuyau conservée.

Ainsi, l'invention s'affranchit de la mise en place de grands sas de confinement de la tuyauterie à démanteler, avec des conséquences économiques évidentes. De plus, dans la mesure où le volume libre, depuis lequel le moyen de coupe est appliqué sur le tuyau, est séparé hermétiquement de la manchette adjacente au boîtier, les risques d'incendier cette manchette lors de l'opération de découpe sont inhibés. Par ailleurs, grâce à l'invention, on s'affranchit de l'utilisation d'échafaudages installés à l'intérieur des sas de confinement précités, au profit de l'utilisation de plateformes élévatrices et similaires. Les conditions de travail s'en trouvent donc améliorées. Les opérateurs peuvent travailler à hauteur idéale, ce qui limite les risques d'accident liés à une chute des opérateurs, à la manutention par palan des tuyaux découpés et/ou au montage et démontage des échafaudages.

Des caractéristiques additionnelles avantageuses du procédé de démantèlement et/ou du dispositif démantèlement, conformes à l'invention, sont spécifiées aux revendications dépendantes 2 à 7, 9 et 10.

L'invention sera mieux comprise à la lecture de la description qui va suivre, donnée uniquement à titre d'exemple et faite en se référant aux dessins sur lesquels :
- la figure 1 est une vue en perspective d'un boîtier d'un dispositif de démantèlement conforme à l'invention ;
- la figure 2 est une vue analogue à la figure 1 et illustre une première étape d'utilisation du boîtier de la figure 1 sur un tuyau ;
- la figure 3 est une vue analogue à la figure 2, montrant, en plus du boîtier, d'autres éléments du dispositif de démantèlement conforme à l'invention et illustrant une étape subséquente à celle de la figure 2 ;
- la figure 4 est une coupe schématique selon le plan IV de la figure 3 ;
- les figures 5 à 7 sont des vues analogues à la figure 4, illustrant respectivement des étapes d'utilisation successives, subséquentes à celle illustrée aux figures 3 et 4 ;
- la figure 8 est une vue analogue à la figure 1, montrant un second mode de réalisation d'un dispositif de démantèlement conforme à l'invention ;
- la figure 9 est une vue analogue à la figure 8, montrant le moyen de coupe appartenant au dispositif de la figure 8 et illustrant une première étape d'utilisation de ce dispositif sur un tuyau ;
- la figure 10 est une vue analogue à la figure 9, montrant, en plus du moyen de coupe, d'autres éléments du dispositif de démantèlement et illustrant une étape d'utilisation subséquente à celle de la figure 9 ; et
- la figure 11 est une coupe schématique selon le plan XI de la figure 10.

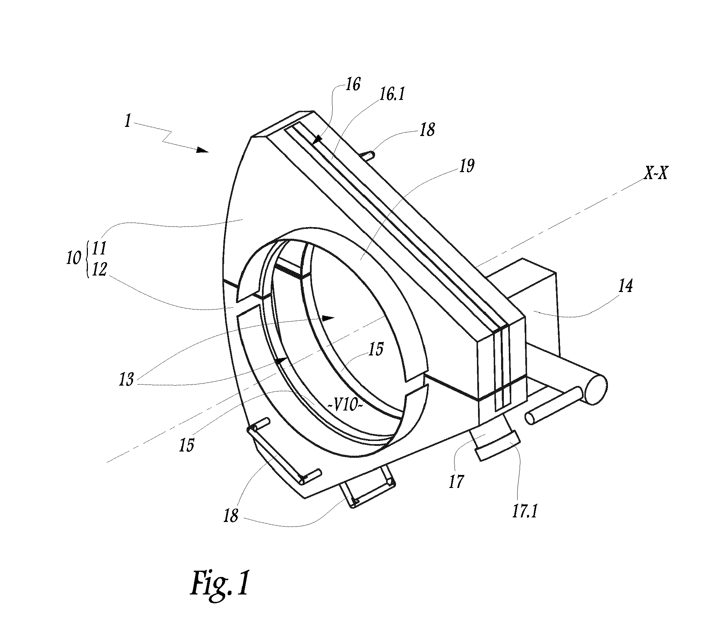

Sur les figures 1 à 7 est représenté un dispositif 1 de démantèlement d'un tuyau 2. Ce tuyau 2 appartient à une tuyauterie potentiellement contaminée : par exemple, lorsque ce tuyau 2 était en service, un fluide contaminant s'est écoulé à l'intérieur ou bien ce tuyau a été, en service, recouvert d'une couche, externe et/ou interne, en une matière nocive pour la santé humaine. A titre d'exemple, le tuyau 2 appartient à la tuyauterie d'un site industriel en cours de démantèlement, tel qu'une centrale nucléaire.

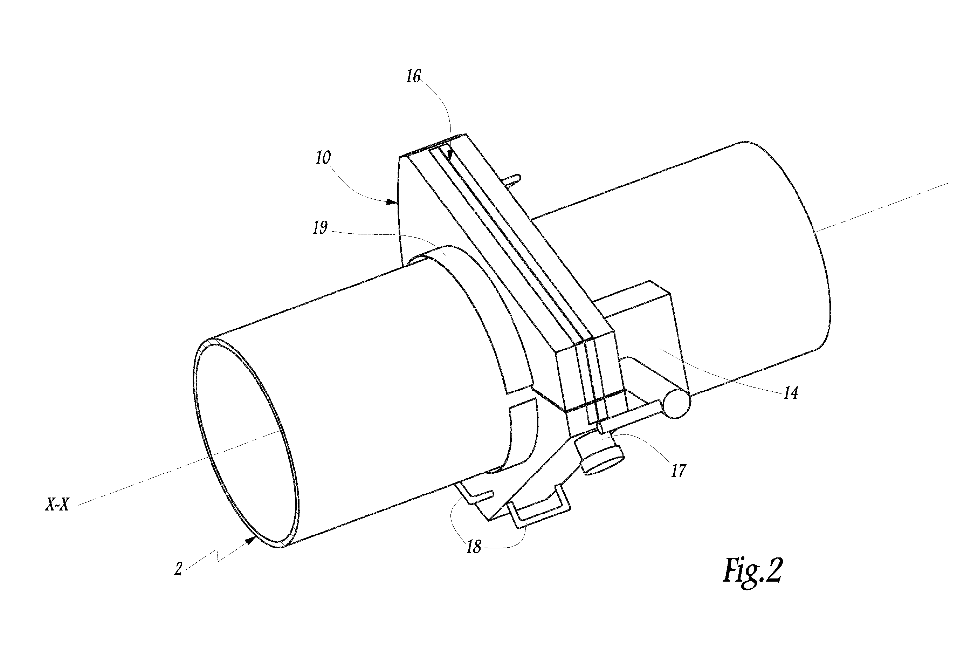

Comme bien visible sur la figure 1, le dispositif 1 comporte un boîtier rigide 10 comprenant deux parties 11 et 12 assemblées l'une à l'autre. Dans sa configuration assemblée, montrée sur la figure 1, le boîtier 10 délimite intérieurement un volume interne V10 qui s'ouvre sur l'extérieur par deux ouvertures identiques 13, cylindriques et coaxiales. La section transversale de chaque ouverture 13 est complémentaire de la section transversale externe du tuyau 2 de manière que, dans la configuration assemblée du boîtier 10, les parties 11 et 12 enserrent de manière ajustée le tuyau 2, comme montré sur la figure 2. En pratique, chaque ouverture 13 est délimitée, pour moitié, par les parties 11 et 12 pour que ces dernières puissent être rapportées latéralement de part et d'autre du tuyau 2, et être ensuite rapprochées l'une de l'autre jusqu'à enserrer le tuyau.

De manière non représentée sur les figures, les parties 11 et 12 sont avantageusement articulées l'une sur l'autre, notamment par une articulation de charnière dont l'axe de basculement est parallèle à l'axe central X-X des ouvertures 13.

Chaque ouverture 13 est pourvue d'un joint d'étanchéité 15 qui court sur toute la périphérie de cette ouverture. En pratique, le joint 15 est constitué de deux éléments de joint, qui recouvrent respectivement les parois demi-cylindriques de l'ouverture 13, appartenant aux parties 11 et 12 du boîtier 10. De cette façon, lorsque le boîtier 10 est rapporté dans sa configuration assemblée autour du tuyau 2, les parties 11 et 12 enserrent le tuyau de manière étanche, isolant ainsi hermétiquement l'intérieur du boîtier vis-à-vis de l'extérieur.

A titre avantageux, le boîtier 10 est verrouillé dans sa configuration assemblée par tout moyen approprié, non représenté sur les figures. A titre d'exemple, ce moyen de verrouillage est un mécanisme à loquet. En particulier, pour des raisons qui apparaîtront plus loin, le moyen de verrouillage utilisé est préférentiellement une sauterelle d'accrochage ou, plus généralement, un système prévu pour, par un premier mécanisme appartenant à ce système, retenir les parties 11 et 12 autour du tuyau 2 dans la configuration assemblée du boîtier 10 et, par un second mécanisme appartenant à ce système, serrer fermement les parties 11 et 12 l'une contre l'autre, induisant le cas échant un écrasement contre le tuyau du joint d'étanchéité 15 réalisé sous forme d'un joint mousse.

En dehors des ouvertures 13 décrites ci-dessus, le volume interne V10 du boîtier 10 est fermé par la paroi de ce boîtier, c'est-à-dire par les parois respectives des parties 11 et 12, avec la possibilité d'accéder à ce volume V10, depuis l'extérieur du boîtier, via une fente 16 traversant de part en part la paroi du boîtier. Cette fente 16 s'étend en longueur suivant une direction globalement transversale à l'axe X-X des ouvertures 13. La fente 16 est étanchée, c'est-à-dire qu'elle est pourvue d'une garniture d'étanchéité 16.1 qui obture hermétiquement la fente. Cette garniture 16.1 isole ainsi hermétiquement le volume interne V10 du boîtier 10 vis-à-vis de l'extérieur, tout en autorisant l'introduction d'objets à travers elle, depuis l'extérieur du boîtier, comme expliqué plus en détail par la suite. En pratique, la garniture 16.1 comprend des lèvres souples ou des éléments similaires, tels que des brosses, à même de se déformer de manière élastique lors de l'introduction, depuis l'extérieur du boîtier 10, d'un objet à travers la fente 16, tout en maintenant un contact étanche avec cet objet, puis en reprenant leur configuration initiale après dégagement de cet objet.

Eu égard à la rigidité de la paroi du boîtier 10, qui est réalisée notamment en métal, ce boîtier est extérieurement à même de supporter d'autres éléments du dispositif 1 en vue de découper le tuyau 2 au niveau de la partie longitudinale 2A de ce dernier, placée à l'intérieur du boîtier 10. Cet aspect technique du boîtier 10 et, plus généralement, d'autres caractéristiques structurelles et fonctionnelles du dispositif 1 vont maintenant être décrits plus en détail, dans le cadre de la présentation d'une utilisation de ce dispositif 1 pour démanteler le tuyau 2, des étapes successives de cette utilisation étant respectivement illustrées par les figures 2 à 7.

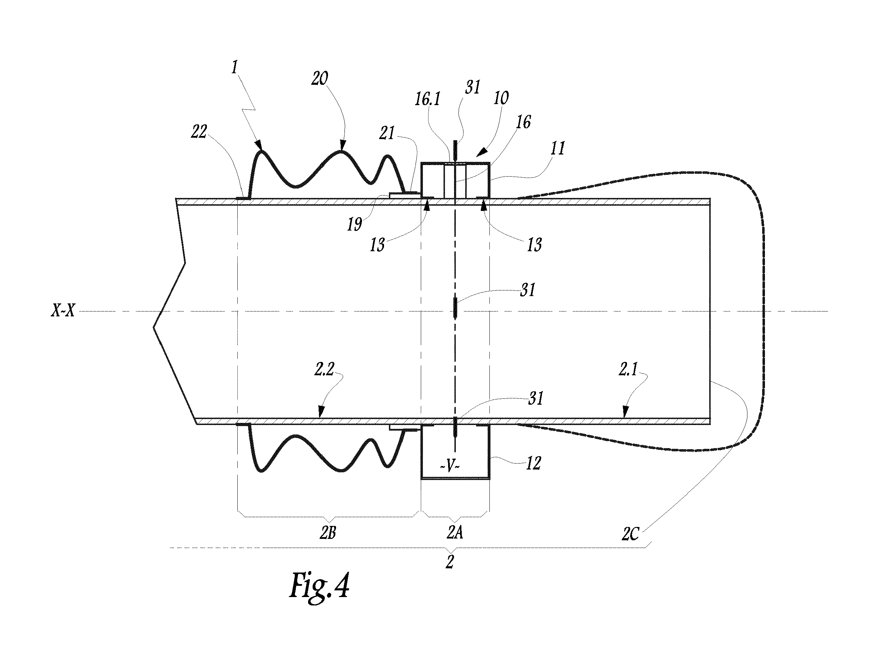

Dans un premier temps, comme représenté sur la figure 2, le boîtier 10 est rapporté de manière étanche sur le tuyau 2, en confinant ainsi à l'intérieur du boîtier un volume libre V tout autour de la partie de tuyau 2A s'étendant entre les ouvertures 13. Ce volume libre V, qui est bien visible dans le plan de coupe des figures 4 à 7, correspond au volume interne V10 du boîtier 10, occupé en partie centrale par la partie de tuyau 2A. Le cas échéant, préalablement à la mise en place du boîtier 10 autour du tuyau 2, ce dernier est élingué et l'opérateur contrôle visuellement l'état du joint 15 à des fins de sécurité.

Avantageusement, pour faciliter les manipulations des parties 11 et 12 du boîtier 10 lors de leur mise en place autour de la partie de tuyau 2A, ces parties sont respectivement pourvues extérieurement de poignées 18.

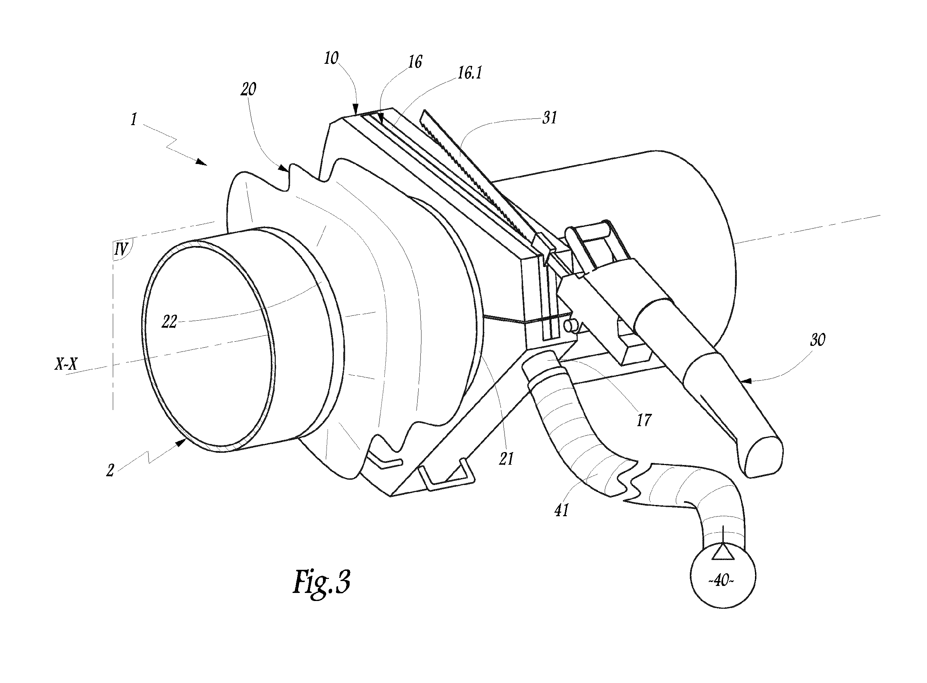

Dans un deuxième temps, une manchette souple 20, appartenant au dispositif 1, est utilisée en coopérant avec le boîtier 10, comme représenté sur les figures 3 et 4. Cette manchette 20 est réalisée en un matériau étanche, par exemple du vinyle. Comme bien visible sur les figures 3 et 4, la manchette 20 est agencée autour du tuyau 2, de manière adjacente, suivant la direction de l'axe X-X, au boîtier 10. La manchette 20 se présente globalement sous la forme d'un tube de matière souple, dont le diamètre intérieur est strictement supérieur au diamètre extérieur du tuyau 2 et qui, en service, est globalement centré sur l'axe X-X. La paroi tubulaire de la manchette 20 présente des plis et des soufflets qui, par déploiement suivant la direction de l'axe X-X, permettent d'augmenter l'étendue axiale de la manchette par rapport à l'étendue de cette dernière dans la configuration montrée sur les figures 3 et 4, et ce pour des raisons qui apparaîtront plus loin.

L'extrémité axiale 21 de la manchette 20, tournée vers le boîtier 10, est fixée de manière hermétique sur l'extérieur de la paroi du boîtier 10, et ce suivant toute la périphérie de cette extrémité 21. Dans le mode de réalisation considéré sur les figures, le boîtier 10 est, à cet effet, pourvu rigidement d'une virole annulaire 19, qui est sensiblement centrée sur l'axe X-X et qui s'étend en saillie depuis la face extérieure de la paroi du boîtier 10, tout autour de l'une des ouvertures 13. Lorsque le boîtier 10 est fixé au tuyau 2, cette virole se trouve ainsi agencée co-axialement au tuyau. Bien entendu, eu égard au fait que le boîtier 10 inclut les parties 11 et 12 assemblées l'une à l'autre, cette virole 19 est constituée de deux éléments de virole, qui s'étendent respectivement autour des portions demi-cylindriques de l'ouverture 13, délimitées par les parties 11 et 12 du boîtier. La fixation entre l'extrémité 21 de la manchette 20 et la virole 19 du boîtier 10 est réalisée par tout moyen approprié, non représenté sur les figures, du moment que la fixation correspondante est étanche, isolant ainsi hermétiquement l'intérieur de la manchette 20, du côté de son extrémité 21, vis-à-vis de l'extérieur du boîtier 10. En pratique, le moyen de fixation utilisé consiste, par exemple, en du ruban adhésif, bobiné autour de l'extrémité 21 ceinturant la virole 19, ou bien en un collier de serrage de cette extrémité 21 contre la virole. La forme de réalisation de ce moyen de fixation étanche n'est pas limitative de la présente invention.

A son extrémité axiale opposée 22, la manchette 20 est fixée directement sur la face extérieure du tuyau 2, et ce de manière étanche. En pratique, un moyen de fixation étanche, non représenté sur les figures et similaire à celui utilisé pour fixer l'extrémité 21 de la manchette 20 autour de la virole 19, est utilisé, en ceinturant l'extrémité 22 autour du tuyau.

Une fois que les extrémités 21 et 22 de la manchette 20 sont fixées respectivement sur le boîtier 10 et le tuyau 2, comme représenté sur les figures 3 à 4, la manchette 20 entoure fixement une partie longitudinale 2B du tuyau 2, qui est immédiatement adjacente à la partie de tuyau 2A placée à l'intérieur du boîtier 10. En raison de la fixation étanche des extrémités 21 et 22 de la manchette 20, on comprend que cette partie de tuyau 2B est extérieurement confinée à l'intérieur de la manchette. Selon une mise en oeuvre préférée, dont l'intérêt apparaîtra plus loin, cette partie de tuyau 2B est agencée vis-à-vis de la partie de tuyau 2A de manière à relier la partie de tuyau 2A à une partie courante étendue du tuyau 2, visible que de manière partielle sur les figures, tandis que, du côté axialement opposé à la partie de tuyau 2B, la partie de tuyau 2A est reliée à une partie terminale courte du tuyau 2, débouchant sur une extrémité libre 2C de ce tuyau.

On notera que, en particulier dans le contexte de la mise en oeuvre préférée évoquée juste ci-dessus, la manchette 20 peut être enfilée autour du tuyau 2, depuis son extrémité 2C, avant que le boîtier 10 ne soit rapporté autour de la partie de tuyau 2A : la fixation de l'extrémité 22 de la manchette 20 peut, elle aussi, être réalisée avant la mise en place du boîtier 10 autour du tuyau, tandis que la fixation de l'extrémité 21 de la manchette est réalisée une fois que le boîtier 10 est fixé, ou à tout le moins globalement mis en place autour du tuyau sans nécessairement être totalement verrouillé en position autour de la partie de tuyau 2A. Ceci étant dit, il est également envisageable de rapporter la manchette 20 après avoir fixé le boîtier 10 autour de la partie de tuyau 2A : dans ce cas, il est bien sûr nécessaire que le diamètre interne de la manchette 20 soit supérieur à la dimension maximale de la section transversale du boîtier 10, afin que cette manchette puisse être enfilée autour et franchir le boîtier 10 pour rejoindre la partie de tuyau 2B.

Une fois que le boîtier 10 et la manchette 20 ont été mis en place et fixés autour du tuyau 2 comme décrit jusqu'ici, une scie 30 est utilisée, comme représenté sur les figures 3 et 4. A cet effet, le boîtier 10 est avantageusement associé extérieurement à une embase 14, qui est visible sur les figures 1 et 2 et qui est spécifiquement dédiée au montage de la scie 30. Selon un exemple de réalisation, cette embase 14 se présente sous la forme d'un prolongement saillant depuis le corps principal du boîtier 10. Selon une autre forme de réalisation, cette embase est une pièce distincte du boîtier 10, qui est fixée autour du tuyau, en étant positionnée par coopération avec un relief ad hoc du boîtier. Dans tous les cas, après avoir monté la scie 30 sur cette embase 14 et ainsi positionné une lame de coupe 31 destinée à être actionnée par la scie, cette lame 31 est introduite dans le volume libre V, jusqu'à être appliquée sur la partie de tuyau 2A, par introduction et guidage à travers la fente 16. Par actionnement de la scie 30, la lame 31 découpe progressivement le tuyau 2 selon un plan perpendiculaire à l'axe X-X, comme représenté sur la figure 4 sur laquelle la lame 31 est représentée dans trois positions successives depuis la fente 16 jusqu'à une zone diamétralement opposée du volume libre V. Ainsi, la lame 31 découpe le tuyau 2 en deux tronçons longitudinaux distincts, à savoir un tronçon 2.1, incluant à la fois l'extrémité libre 2C du tuyau et environ la moitié de la partie de tuyau 2A, tournée vers cette extrémité 2C, et un tronçon 2.2, incluant l'autre moitié de la partie de tuyau 2A, ainsi que la partie de tuyau 2B et tout le reste du tuyau 2. On notera que la lame 31 agit sur le tuyau 2 depuis le volume libre V de sorte que les copeaux et poussières générés lors de la découpe à l'extérieur du tuyau restent confinés à l'intérieur du volume libre V, en étant notamment collectés dans le fond du boîtier 10.

Avantageusement, la scie utilisée 30 est une scie sabre dont la lame 31 permet une découpe à froid du tuyau 2, en limitant la projection de copeaux et de poussières, ainsi qu'en limitant la production d'étincelles.

A titre d'option particulièrement avantageuse, la scie 30 est utilisée pendant que le volume libre V est raccordé de manière étanche à un moyen d'aspiration 40 montré de manière uniquement schématique sur la figure 3. A cet effet, le boîtier 10 est pourvu d'une bouche ou prise 17 de connexion à ce moyen d'aspiration 40. A l'une de ses extrémités, cette prise 17 débouche intérieurement dans le volume libre V, tandis que son extrémité opposée est à même d'être raccordée au moyen d'aspiration 40 par un flexible 41 ou similaire. En pratique, le moyen d'aspiration 40 consiste en un aspirateur dont le flux aspiré est dirigé dans un caisson de filtrage. Lorsque la lame 31 est appliquée sur le tuyau 2, le moyen d'aspiration 40 est actionné si bien que les copeaux et poussières générés ne se déposent pas tous dans le fond du boîtier 10, mais sont au moins en partie charriés par le flux d'air aspiré jusqu'au moyen d'aspiration 40, via le flexible 41, ces copeaux et poussières étant alors piégés dans le caisson de filtrage précité. Autrement dit, le raccordement étanche du volume libre V au moyen d'aspiration 40 permet d'assurer un confinement dynamique de ce volume V.

Une fois la découpe terminée, la lame 31 est retirée du volume libre V, en étant dégagée à travers la fente 16 dont la garniture d'étanchéité 16.1 se referme de manière étanche. La scie 30 peut alors être déposée. A l'issue de cette étape, les tronçons 2.1 et 2.2 sont séparés axialement l'un de l'autre par une fente correspondant à la largeur de la lame 31.

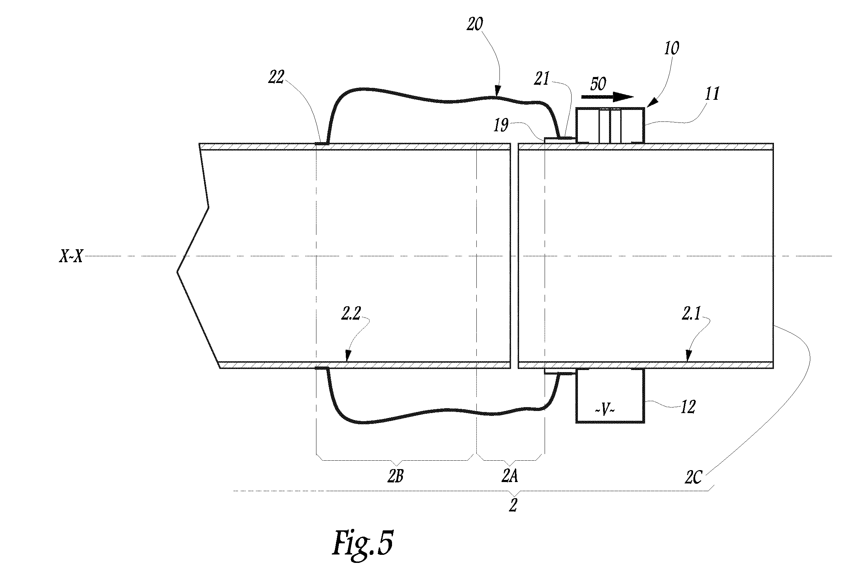

Comme représenté sur la figure 5, l'étape suivante consiste à décaler la position axiale du boîtier 10 vers l'extrémité libre 2C du tuyau 2, comme indiqué par la flèche 50 sur la figure 5. Pour ce faire, plusieurs possibilités sont envisageables, du moment qu'elles reposent sur un mouvement, notamment un glissement axial, du boîtier 10 le long du tronçon 2.1, tout en maintenant l'étanchéité entre le boîtier et le tuyau 2. A titre d'exemple, le moyen de verrouillage porté par le boîtier 10, qui jusqu'à lors maintenait les parties 11 et 12 du boîtier autour du tuyau 2 en enserrant ce dernier, peut être partiellement libéré, pour autoriser le coulissement des parties 11 et 12 autour du tronçon 2.1, sans rompre leurs lignes d'étanchéité avec le tuyau. On comprend ainsi l'intérêt de prévoir que le moyen de verrouillage précité consiste en une sauterelle d'accrochage ou en un système similaire, tel que décrit plus haut. De la sorte, le volume libre V est maintenu confiné autour du tronçon 2.1, jusqu'à ce que le boîtier 10 se retrouve totalement autour du tronçon 2.1, en particulier après que la paroi pourvue de la virole 19 ait franchi axialement, en direction de l'extrémité 2C, la fente séparant les tronçons 2.1 et 2.2, comme représenté sur la figure 5. Bien entendu, au cours du mouvement du boîtier 10 le long du tronçon 2.1, la manchette 20 se déploie, par ouverture de ses plis et soufflets, et recueille ainsi intérieurement les copeaux et poussières résiduels provenant de l'intérieur du tuyau 2, tandis que ses extrémités 21 et 22 restent liées fixement à, respectivement, la virole 19 du boîtier 10 et le tronçon 2.2, comme bien visible sur la figure 5.

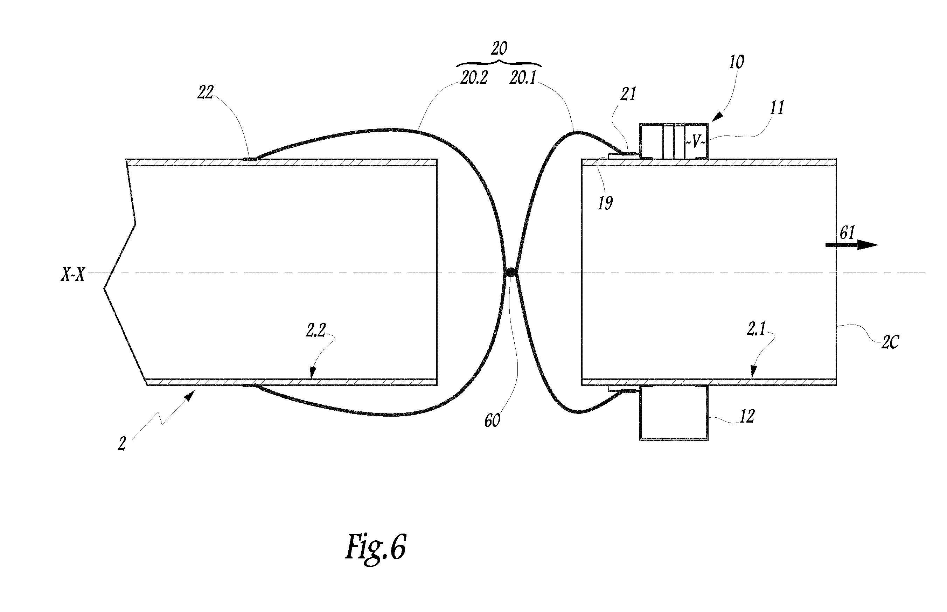

Comme représenté sur la figure 6, les tronçons 2.1 et 2.2 peuvent alors être écartés l'un de l'autre. Dans le contexte d'utilisation envisagé ici, on comprend que c'est le tronçon 2.1 qui est déplacé vis-à-vis du tronçon 2.2 qui, lui, reste fixe vis-à-vis du reste de la tuyauterie, comme indiqué par la flèche 61. Les tronçons 2.1 et 2.2 sont ainsi écartés l'un de l'autre de manière à laisser entre eux un écartement suffisant, dans lequel la manchette 20 est, dans sa partie courante, étranglée sur elle-même. Cet étranglement consiste à replier sur elle-même la paroi de la manchette 20, en réduisant progressivement son diamètre interne, jusqu'à sensiblement l'annuler, comme représenté sur la figure 6. Pour ce faire, on rapporte autour de la manchette 20, entre les tronçons 2.1 et 2.2, un moyen d'étranglement 60, tel qu'une bande de ruban adhésif ou un collier de serrage, qui, par contraction radiale de la manchette, ferme cette dernière sur elle-même, isolant ainsi hermétiquement l'un de l'autre les intérieurs respectifs des deux parties terminales de manchette 20.1 et 20.2, séparées par le moyen d'étranglement 60. Autrement dit, comme représenté sur la figure 6, le volume intérieur de la partie terminale 20.1 de la manchette 20, qui est fixée au boîtier 10 par l'extrémité 21 de la manchette, est isolé hermétiquement par le moyen d'étranglement 60 du volume intérieur de la partie terminale 20.2 de la manchette 20, fixée au tronçon 2.2 par l'extrémité de manchette 22.

Avantageusement, le moyen d'aspiration 40 est maintenu actionné jusqu'à l'étranglement de la manchette 20 inclusivement, notamment pendant le glissement du boîtier 10 selon la flèche 50 et pendant l'écartement relatif des tronçons 2.1 et 2.2, afin de récupérer dans le caisson de filtrage de ce moyen 40 un maximum de poussières et copeaux résiduels, notamment présents à l'intérieur du tuyau 2 après son découpage par la lame 31 de la scie 30. Une fois que le moyen d'aspiration 40 est arrêté, le flexible 41 est déconnecté de la prise 17 que l'on vient alors obturer par un bouchon rapporté 17.1, tel qu'un bouchon vissé sur l'extrémité libre de la prise 17, comme montré sur les figures 1 et 2.

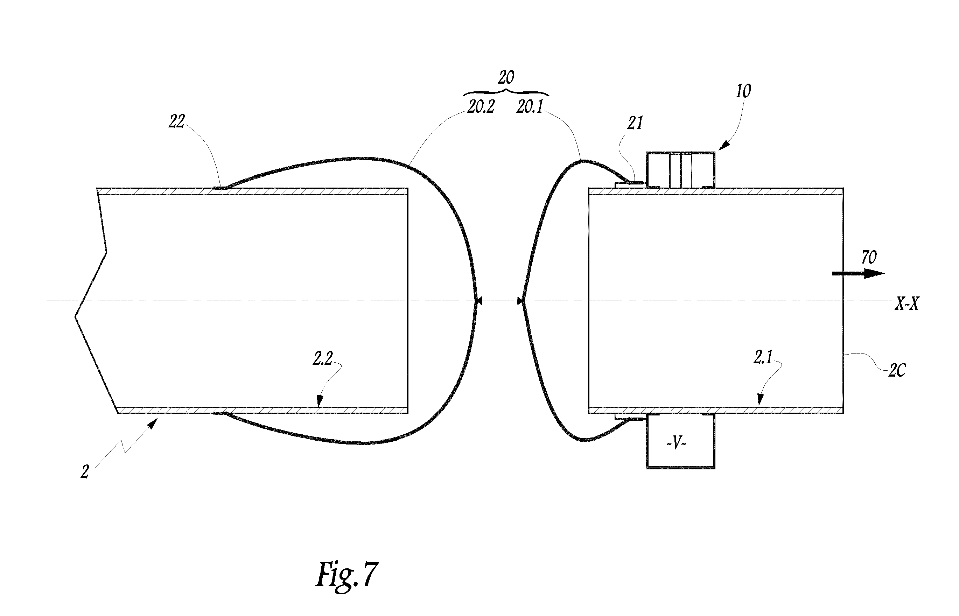

Comme montré sur la figure 7, l'étape suivante consiste à séparer l'une de l'autre les parties terminales 20.1 et 20.2 de la manchette 20, en sectionnant le moyen d'étranglement 60, tout en prenant garde de ne pas rompre le confinement assuré par ces parties terminales de la manchette. Le tronçon 2.1 peut alors être évacué conjointement avec le boîtier 10, fixé à ce tronçon 2.1, et avec la partie terminale 20.1 de la manchette 20, comme indiqué par la flèche 70 sur la figure 7. En pratique, le tronçon 2.1 est ainsi évacué jusque dans un sas où le boîtier 10 est déposé, ainsi que, avantageusement, contrôlé et décontaminé en vue d'être réutilisé. Le tronçon de tuyau 2.1 est quant à lui mis au rebut, le cas échéant en étant préalablement redécoupé à l'aide d'instruments dédiés, non concernés par la présente invention.

Avantageusement, après la décontamination du boîtier 10, ce dernier est renvoyé jusqu'au lieu de la découpe précédemment intervenue, afin d'être utilisé une nouvelle fois, en étant notamment rapporté de manière étanche sur le tronçon conservé 2.2. On comprend que le procédé décrit jusqu'ici peut être mis en oeuvre une nouvelle fois, pour séparer ce tronçon 2.2 en deux nouveaux tronçons, et ainsi de suite. Dans ce contexte, on notera que la partie terminale 20.2 de la manchette 20, liée fixement au tronçon 2.2, est avantageusement laissée en place : en effet, cette partie de manchette 20.2 présente l'intérêt de confiner l'extrémité libre du tronçon 2.2, évitant ainsi que, lors de la nouvelle mise en oeuvre du procédé de démantèlement, des poussières et des copeaux, produits lors de la découpe du tronçon 2.2, puissent être disséminés, en s'échappant par l'intérieur du tuyau, via l'extrémité libre précitée. D'ailleurs, sur la base des considérations qui précèdent, une option de mise en oeuvre du procédé décrit en regard des figures 2 à 7 consiste à prévoir un confinement hermétique de l'extrémité libre 2C avant de réaliser l'opération de découpe montrée à la figure 4 : la mise en oeuvre de cette option est montrée uniquement à la figure 4, sous forme d'un contour en pointillés, figurant la présence d'une partie de manchette, qui est fonctionnellement similaire à la partie de manchette 20.2 et qui a été laissée en place lors d'une mise en oeuvre antérieure du procédé de démantèlement ayant abouti à la réalisation de l'extrémité 2C.

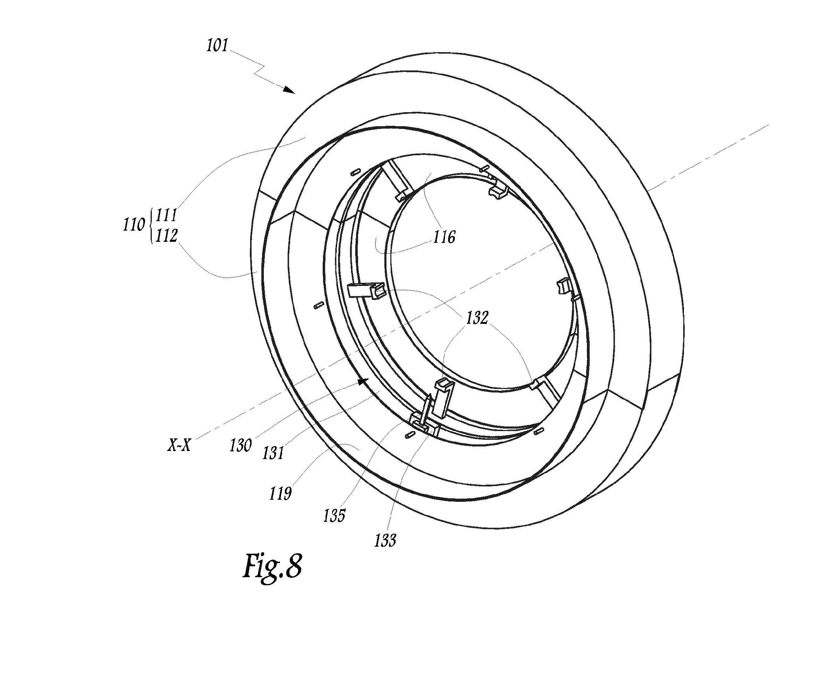

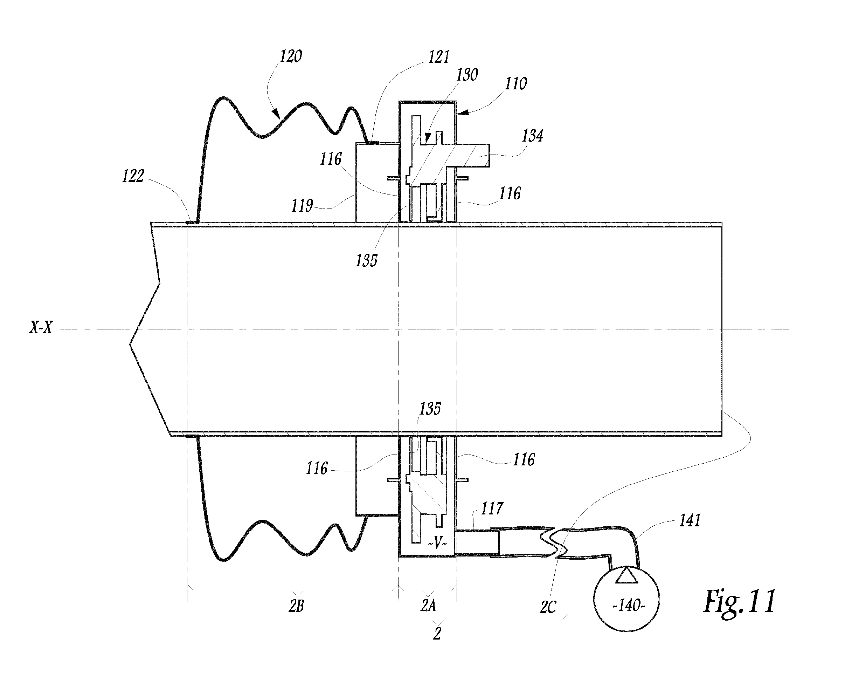

Sur les figures 8 à 11 est représenté un mode de réalisation alternatif du dispositif de démantèlement 1, référencé 101. De manière similaire au dispositif 1, le dispositif 101 comprend un boîtier 110, une manchette 120, une scie 130 et un moyen d'aspiration 140, qui sont fonctionnellement similaires à, respectivement, le boîtier 10, la manchette 20, la scie 30 et le moyen d'aspiration 40. La manchette 120 et le moyen d'aspiration 140 présentent une structure similaire à la manchette 20 et au moyen d'aspiration 40 du dispositif 1. En particulier, comme visible sur la figure 11, le moyen d'aspiration 140 est associé à un flexible 141 de raccordement entre ce moyen 140 et une prise de connexion 117, portée par le boîtier 110 et fonctionnement similaire à la prise 17 du boîtier 10. Quand à eux, le boîtier 110 et la scie 130 présentent une structure se différenciant de celle du boîtier 10 et de la scie 30, comme expliqué plus en détail ci-après.

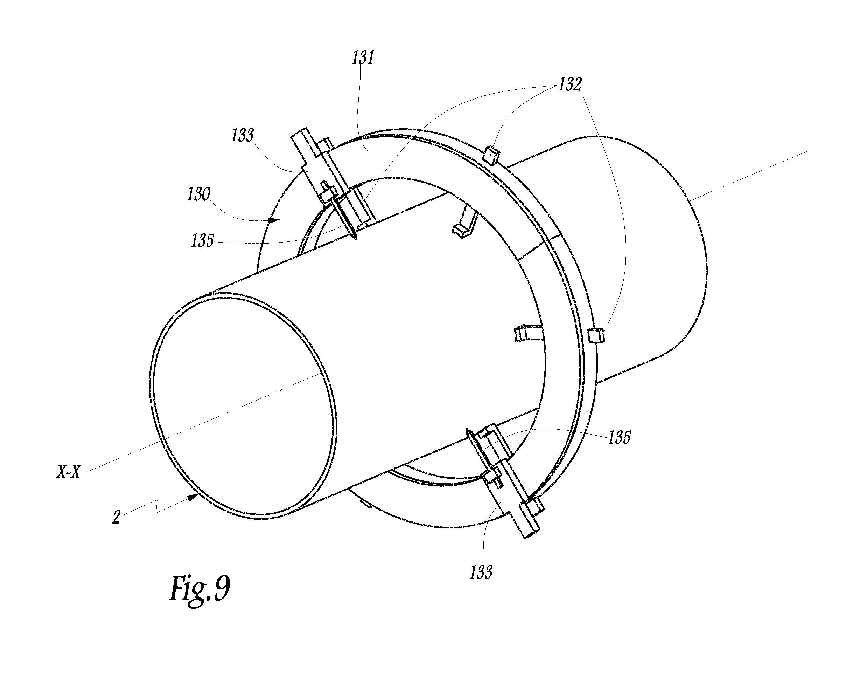

Comme bien visible sur la figure 9, la scie 130 est une scie orbitale incluant un anneau 131 adapté pour être fixé directement sur le tuyau 2, par l'intermédiaire de pattes de fixation 132, qui sont réparties autour de l'anneau 131 et qui s'étendent chacune radialement à l'axe central de l'anneau, en occupant une position ajustable suivant la direction radiale par rapport à l'anneau 131 : par ajustement des différentes pattes 132, on comprend que l'anneau 131 peut être immobilisé co-axialement autour du tuyau 2, sans avoir besoin de percer ce tuyau. La scie orbitale 130 comprend également une ou plusieurs navettes 133, conçues pour se mouvoir le long d'au moins une portion de l'anneau 131, suivant la périphérie de cet anneau, l'entraînement de cette ou ces navettes 133 étant réalisé par une unité motrice 134 qui n'est visible que sur la figure 11, en coupe schématique. Cette unité 134 consiste par exemple en un moteur embarqué, notamment un moteur électrique. Ou bien l'unité motrice 134 consiste en un module de transformation énergétique qui, par alimentation hydraulique ou pneumatique provenant d'une centrale hydraulique ou pneumatique déportée, produit une force motrice mécanique. Chaque navette 133 porte une lame 135 ou un organe de coupe similaire, qui, lorsque l'anneau 131 est fixé autour du tuyau 2, est appliqué contre la face extérieure du tuyau : ainsi, on comprend que, lors de l'entraînement de la navette 133, sa lame 135 agit sur la paroi du tuyau, afin de découper celle-ci de part en part, depuis sa face extérieure, et ce suivant une direction périphérique du tuyau. La scie orbitale 130 ne sera pas décrite ici plus avant, étant entendu qu'un tel outil est connu en soi.

Conformément à l'invention, l'actionnement de la scie orbitale 130 n'est réalisé qu'après avoir agencé l'essentiel de cette scie, en particulier son anneau 131 et ses lames 135, à l'intérieur d'un volume libre V délimité autour de la partie de tuyau 2A par le boîtier 110. En pratique, le boîtier 110 présente une géométrie à même d'accommoder intérieurement la présence de la scie 130 : dans l'exemple de réalisation considéré ici, le boîtier 110 comprend deux parties 111 et 112, qui sont fonctionnellement similaires aux parties 11 et 12 du boîtier 10 et qui se présentent globalement sous la forme de deux demi-coquilles annulaires, qui, à l'état assemblé du boîtier 110, sont centrées sur un axe X-X, confondu avec l'axe central de l'anneau 131 en présence de la scie 130. D'autres caractéristiques structurelles et fonctionnelles du dispositif 101, en particulier de son boîtier 110, vont maintenant être décrites plus en détail, dans le cadre de la présentation d'une utilisation de ce dispositif 101 pour démanteler le tuyau 2, des premières étapes successives de cette utilisation étant respectivement illustrées par les figures 9 à 11.

Dans un premier temps, comme représenté sur la figure 9, la scie 130 est mis en place et fixée autour de la partie de tuyau 2A, comme expliqué précédemment.

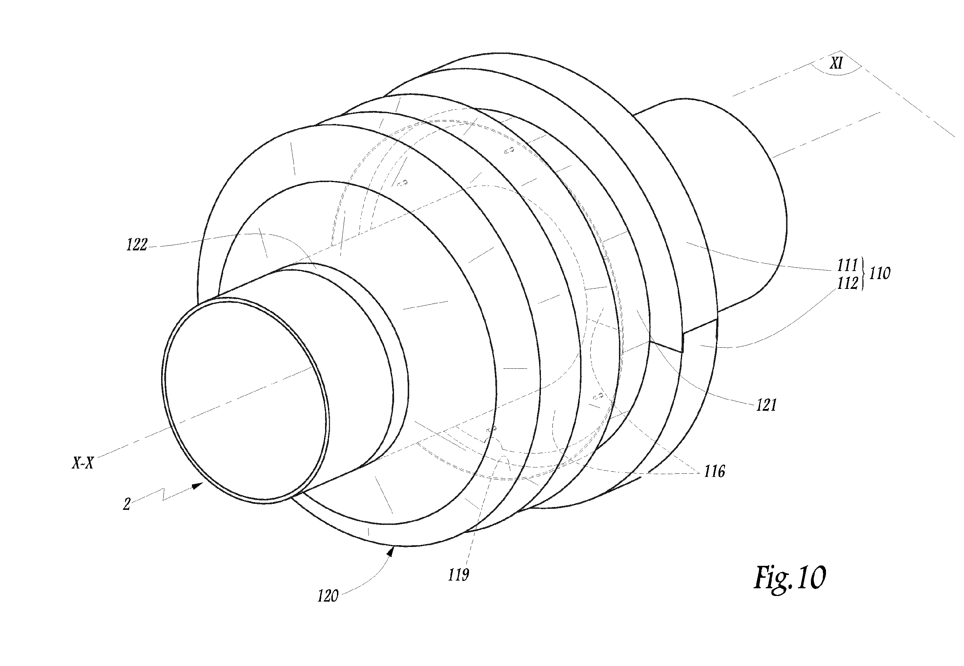

Dans un deuxième temps, les parties 111 et 112 du boîtier 10 sont rapportées autour de la partie de tuyau 2A, en logeant l'essentiel de la scie 130 à l'intérieur de ses parties 111 et 112, jusqu'à assembler ces parties 111 et 112 l'une à l'autre, aboutissant ainsi à la configuration du boîtier 110 montrée sur les figures 10 et 11. Bien entendu, à titre de variante, le boîtier 110 peut être mis en place autour du tuyau 2 conjointement avec la scie 130 : dans ce cas, la scie 130 est avantageusement fixée à demeure à l'intérieur du boîtier 110.

Dans tous les cas, comme bien visible sur la figure 11, la scie 30 se trouve in fine logée dans un volume libre V correspondant au volume interne du boîtier 110, occupé en partie centrale par la partie de tuyau 2A. Le boîtier 110 est conçu pour confiner hermétiquement ce volume V autour de la partie de tuyau 2A : dans l'exemple de réalisation considéré ici, dans la mesure où le diamètre intérieur des ouvertures centrales délimitées par les parties 111 et 112 est supérieur au diamètre extérieur du tuyau 2, on prévoit de prolonger radialement vers l'intérieur les parois frontales du boîtier, opposées axialement l'une à l'autre : ce prolongement est réalisé par des plaques d'extension 116, qui, comme visible en pointillé sur la figure 10 pour les plaques d'extension dirigées vers le lecteur, ainsi que comme visible pour les plaques d'extension tournées à l'opposé du lecteur sur la figure 8, sont fixées sur les parois frontales précitées du boîtier 110 et qui réduisent le diamètre effectif des ouvertures centrales du boîtier, en venant ceinturer la périphérie extérieure du boîtier 2, comme bien visible sur la figure 11, avantageusement avec interposition de joints, fonctionnellement similaires aux joints 15 du dispositif 10. On comprend que ces plaques d'extension 116 sont ainsi adaptées au diamètre extérieur du tuyau 2, si bien que, en présence d'un tuyau de diamètre extérieur différent, les plaques d'extension 116 sont interchangeables afin de facilement et rapidement adapter le diamètre effectif des ouvertures centrales du boîtier 110 au tuyau à démanteler.

Le cas échéant, comme dans l'exemple de réalisation considéré ici, l'unité motrice 134 de la scie 130 s'étend pour partie à l'extérieur du boîtier 110, en traversant de part en part la paroi de boîtier, avec interposition d'un joint d'étanchéité pour garantir le confinement hermétique du volume libre V par le boîtier 110. L'intérêt de cette disposition est de pouvoir facilement actionner l'unité motrice 134 depuis l'extérieur du boîtier 10, étant entendu que la partie de cette unité motrice, émergeant du boîtier 110, porte par exemple un interrupteur de mise en marche. Cette disposition facilite également, le cas échéant, l'alimentation énergétique de l'unité motrice 134 depuis l'extérieur du boîtier 110.

Avant ou après que le boîtier 110 soit rapporté autour de la partie de tuyau 2A, en confinant hermétiquement le volume V dans lequel se retrouve agencé l'essentiel de la scie 130, on rapporte la manchette 120 autour de la partie de tuyau adjacente 2B, et ce conformément aux mêmes spécifications que celles détaillées plus haut pour le dispositif 1. En particulier, comme bien visible sur les figures 8 et 11, l'extrémité 121 de la manchette 120, tournée en service vers le boîtier 110, est agencée autour et fixée de manière étanche à une virole 119 dont est pourvu rigidement le boîtier 110, cette virole 119 étant fonctionnellement similaire à la virole 19 du boîtier 10. Quant à l'extrémité opposée 122 de la manchette 120, elle est fixée directement autour de la partie de tuyau 2B, de la même façon que l'extrémité 22 de la manchette 20 du dispositif 1.

La suite de l'utilisation du dispositif 101 est similaire à celle décrite pour le dispositif 1 en regard des figures 4 à 7. Brièvement, avantageusement après actionnement du moyen d'aspiration 140 afin d'assurer le confinement dynamique du volume libre V, l'actionnement de la scie 130 provoque le découpage de la partie de tuyau 2A, jusqu'à séparation des deux tronçons 2.1 et 2.2. Après étranglement de la manchette 120 entre les tronçons 2.1 et 2.2 préalablement écartés l'un par rapport à l'autre, et après sectionnement de la zone étranglée correspondante, le tronçon 2.1 est évacué conjointement avec la partie terminale de manchette correspondante et avec le boîtier 110, et ce toujours en présence de la scie orbitale 130.

Ainsi, par comparaison entre les dispositifs 1 et 101, on comprend que le boîtier 110 présente l'avantage de ne pas inclure une fente ou, plus généralement, une ouverture de passage d'un moyen de coupe depuis l'extérieur du boîtier, tel que la fente 16 du boîtier 10. A l'inverse, comme la scie 130 est logée à l'intérieur du boîtier 110, elle doit être évacuée conjointement avec le tronçon 2.1, en devant notamment être décontaminée par la suite afin de pouvoir être réutilisée.

Divers aménagements et variantes des dispositifs 1 et 101 et aux procédés de mise en oeuvre de ces dispositifs visant à démanteler le tuyau 2 sont par ailleurs envisageables. A titre d'exemples :
- Plutôt que de déplacer le boîtier 10 le long du tronçon 2.1 avant de séparer l'un de l'autre les tronçons 2.1 et 2.2, comme expliqué plus haut en regard de la figure 5, on peut envisager d'écarter l'un de l'autre les tronçons 2.1 et 2.2 alors que le boîtier 10 occupe la position la figure 4, c'est-à-dire est situé axialement de part et d'autre de la fente obtenue par découpe du tuyau, à condition de maintenir la liaison mécanique entre le boîtier 10 et le tronçon 2.1, tandis que, dans le même temps, le boîtier 10 est dégagé du tronçon 2.2, moyennant la libération de sa liaison avec ce tronçon 2.2 ; cependant, dans ce cas, on comprend que le confinement du volume libre V est rompu, dans le sens où ce volume communique alors librement avec la zone d'écartement entre les tronçons 2.1 et 2.2, étant rappelé que cette zone d'écartement reste confinée à l'intérieur de la manchette 20 ; il en résulte une potentielle libération de copeaux et de poussières, jusqu'alors stockés dans le volume libre V, à l'intérieur de la manchette 20, ces copeaux et poussières ainsi libérés devant être convenablement traités par la suite, notamment dans le sas à l'intérieur duquel le boîtier 10 est déposé vis-à-vis du tronçon 2.1, comme expliqué plus haut ; et/ou
- Plutôt que d'utiliser la scie sabre 30 ou la scie orbitale 130, d'autres formes de réalisation sont envisageables pour l'outil de coupe appartenant au dispositif de démantèlement, du moment que cet outil inclut un moyen de coupe qui, après être introduit dans le volume libre V du boîtier depuis l'extérieur de ce volume libre ou bien après être mis en place sur le tuyau avant ou simultanément à la mise en place du boîtier, est à même d'agir sur le tuyau 2 pour le découper en deux.

## Revendications

1. Procédé de démantèlement d'une tuyauterie potentiellement contaminée, dans lequel :
- autour d'une première partie longitudinale (2A) d'un tuyau (2) de la tuyauterie, on rapporte et on fixe un boîtier (10 ; 110) à l'intérieur duquel un volume libre (V) est confiné autour de cette première partie du tuyau,
- autour d'une seconde partie longitudinale (2B) du tuyau (2), qui est adjacente à la première partie (2A) du tuyau, on rapporte une manchette (20 ; 120), qui est constituée d'un matériau étanche, dont une extrémité (21 ; 121) est fixée de manière hermétique sur le boîtier (10 ; 110), et à l'intérieur du reste de laquelle la seconde partie du tuyau est confinée,
- depuis le volume libre (V), on applique un moyen de coupe (31 ; 135) sur la première partie (2A) du tuyau (2), jusqu'à découper le tuyau en deux tronçons distincts (2.1, 2.2),
- après avoir écarté l'un (2.1) des deux tronçons, qui est maintenu lié au boîtier (10), vis-à-vis de l'autre tronçon (2.2), auquel appartient la seconde partie (2B) du tuyau (2), on étrangle une zone de la manchette (20 ; 120) entre ces deux tronçons, jusqu'à isoler hermétiquement une partie terminale (20.1) de la manchette, reliant sa zone étranglée à son extrémité (21 ; 121) fixée au boîtier, vis-à-vis du reste de la manchette, et
- après avoir séparé ladite partie terminale (20.1) de la manchette (20 ; 120) vis-à-vis du reste de la manchette, on l'évacue conjointement avec le tronçon (2.1) lié au boîtier (10 ; 110).

2. Procédé suivant la revendication 1, dans lequel, avant d'écarter l'un de l'autre les deux tronçons (2.1, 2.2), on déplace le boîtier (10, 110) le long du tuyau (2) en direction opposée à la seconde partie (2B) du tuyau de manière à maintenir le volume libre (V) confiné autour du tronçon (2.1) qui est évacué par la suite.

3. Procédé suivant l'une des revendications 1 et 2, dans lequel, après avoir rapporté et fixé le boîtier (10 ; 110) autour de la première partie (2A) du tuyau (2), on raccorde le volume libre (V) à un moyen d'aspiration d'air (40 ; 140) actionné au moins pendant l'application du moyen de coupe (31 ; 135), voire jusqu'à l'étranglement de la manchette (20 ; 120) inclusivement.

4. procédé suivant l'une quelconque des revendications précédentes, dans lequel le moyen de coupe (31) est introduit dans le volume libre (V) depuis l'extérieur de ce volume libre après avoir rapporté le boîtier (10) autour de la première partie (2A) du tuyau (2).

5. Procédé suivant l'une quelconque des revendications 1 à 3, dans lequel le moyen de coupe (135) est mis en place autour de la première partie (2A) du tuyau (2) avant ou simultanément à la mise en place du boîtier (10) autour de cette première partie du tuyau de sorte qu'au moins l'essentiel du moyen de coupe est logé en permanence dans le volume libre (V) tant que le boîtier (10) est fixé au tuyau.

6. Procédé suivant l'une quelconque des revendications précédentes, dans lequel la première partie (2A) du tuyau (2) est, à l'opposé de la seconde partie (2B) du tuyau, reliée à une extrémité libre (2C) du tuyau, laquelle extrémité libre est confinée avant de découper la première partie du tuyau, confinée en particulier à l'intérieur du reste d'une manchette, laissée en place sur le tronçon non évacué (2.2) du tuyau à l'issue d'une mise en oeuvre antérieure du procédé.

7. Procédé suivant l'une quelconque des revendications précédentes, dans lequel le reste (20.2) de la manchette (20 ; 120), non évacué avec le tronçon (2.1) lié au boîtier (10, 110), est laissé en place sur ce tronçon non évacué (2.2), et en ce qu'on réitère ensuite une mise en oeuvre du procédé aboutissant à découper en deux ce tronçon non évacué.

8. Dispositif (1 ; 101) de démantèlement d'une tuyauterie potentiellement contaminée, comprenant :
- un boîtier de confinement (10 ; 110) adapté pour être rapporté de manière étanche sur un tuyau (2) de la tuyauterie, en confinant un volume libre (V) autour de ce tuyau, et
- un moyen (31 ; 135) de coupe du tuyau (2), adapté pour être appliqué sur le tuyau, en étant situé dans le volume libre (V) lorsqu'il découpe le tuyau, et pour découper le tuyau en deux tronçons séparables (2.1, 2.2),
**caractérisé en ce que** le dispositif comprend en outre :
- une manchette (20 ; 120), qui est constituée d'un matériau étanche, notamment de vinyle, et qui est adaptée pour être rapportée autour du tuyau (2) et de manière adjacente au boîtier (10 ; 110) de telle sorte qu'une extrémité (21 ; 121) de la manchette est à même d'être fixée de manière hermétique sur le boîtier tandis que le reste de la manchette est à même de confiner une partie (2B) du tuyau adjacente à la partie (2A) confinée par le boîtier, et
- un moyen (60) d'étranglement de la manchette (20 ; 120), adapté pour être rapporté sur la manchette entre les deux tronçons (2.1, 2.2) de manière à isoler hermétiquement et permettre la séparation de la partie (20.1) de la manchette, fixée au boîtier (10 ; 110), vis-à-vis du reste de la manchette.

9. Dispositif suivant la revendication 8, dans lequel le boîtier (10 ; 110) est pourvu d'une virole (19 ; 119), qui est agencée de manière sensiblement coaxiale au tuyau (2) lorsque le boîtier est rapporté sur le tuyau et autour de laquelle l'extrémité libre (21 ; 121) de la manchette (20 ; 120) est fixée de manière hermétique.

10. Dispositif suivant l'une des revendications 8 ou 9, **caractérisé en ce que** le dispositif (1 ; 101) comprend en outre un moyen d'aspiration (40 ; 140), et **en ce que** le boîtier (10 ; 110) est pourvu d'une prise (17 ; 117) de raccordement de son volume libre (V) à ce moyen d'aspiration.

## Patentansprüche

1. Verfahren zum Abbau eines potenziell kontaminierten Rohrleitungssystems, wobei:
- um einen ersten Längsbereich (2A) einer Rohrleitung (2) des Rohrleitungssystems herum ein Gehäuse (10; 110) angesetzt und befestigt wird, in welchem ein Freiraum (V) um diesen ersten Bereich der Rohrleitung herum abgeschirmt wird,
- um einen zweiten Längsbereich (2B) der Rohrleitung (2) herum, welcher an den ersten Bereich (2A) der Rohrleitung angrenzt, eine Manschette (20; 120) angesetzt wird, die aus einem dichten Material besteht und die mit einem Ende (21; 121) in hermetisch dichter Weise an das Gehäuse (10; 110) befestigt wird und in deren restlichen Innenraum der zweite Bereich der Rohrleitung abgeschirmt wird,
- von dem Freiraum (V) ausgehend eine Schneideinrichtung (31; 135) auf den ersten Bereich (2A) der Rohrleitung (2) angewendet wird, bis die Rohrleitung in zwei separate Teilbereiche (2.1, 2.2) zerschnitten ist,
- nachdem ein Teilbereich (2.1) der beiden Teilbereiche, der mit dem Gehäuse (10) verbunden bleibt, von dem anderen Teilbereich (2.2), zu dem der zweite Bereich (2B) der Rohrleitung (2) gehört, entfernt worden ist, ein Bereich der Manschette (20; 120) zwischen diesen beiden Teilbereichen zusammengequetscht wird, bis ein Endbereich (20.1) der Manschette, welcher deren zusammengequetschten Bereich mit ihrem an das Gehäuse befestigten Ende (21; 121) verbindet, hermetisch gegenüber der restlichen Manschette isoliert ist, und
- nachdem der Endbereich (20.1) der Manschette (20; 120) von der restlichen Manschette getrennt worden ist, dieser zusammen mit dem mit dem Gehäuse (10; 110) verbundenen Teilbereich (2.1) beseitigt wird.

2. Verfahren nach Anspruch 1,
wobei vor dem Entfernen der beiden Teilbereiche (2.1, 2.2) voneinander das Gehäuse (10, 110) entlang der Rohrleitung (2) in der zum zweiten Bereich (2B) der Rohrleitung entgegengesetzten Richtung so verlagert wird, dass der Freiraum (V) um den Teilbereich (2.1) herum abgeschirmt gehalten wird, der anschließend beseitigt wird.

3. Verfahren nach einem der Ansprüche 1 und 2,
wobei nach dem Ansetzen und Befestigen des Gehäuses (10; 110) um den ersten Bereich (2A) der Rohrleitung (2) herum der Freiraum (V) an eine Luftabsaugeinrichtung (40; 140) angeschlossen wird, die zumindest während der Anwendung der Schneideinrichtung (31; 135) bzw. einschließlich bis zum Zusammenquetschen der Manschette (20; 120) betätigt wird.

4. Verfahren nach einem der vorangehenden Ansprüche,
wobei die Schneideinrichtung (31) in den Freiraum (V) von der Außenseite dieses Freiraums eingeführt wird, nachdem das Gehäuse (10) um den ersten Bereich (2A) der Rohrleitung (2) herum angesetzt worden ist.

5. Verfahren nach einem der Ansprüche 1 bis 3,
wobei die Schneideinrichtung (135) um den ersten Bereich (2A) der Rohrleitung (2) herum vor oder gleichzeitig mit dem Anbringen des Gehäuses (10) um diesen ersten Bereich der Rohrleitung herum derart angebracht wird, dass zumindest der wesentliche Teil der Schneideinrichtung dauerhaft in dem Freiraum (V) aufgenommen wird, solange das Gehäuse (10) an der Rohrleitung befestigt ist.

6. Verfahren nach einem der vorangehenden Ansprüche,
wobei der erste Bereich (2A) der Rohrleitung (2) entgegengesetzt zum zweiten Bereich (2B) der Rohrleitung mit einem freien Ende (2C) der Rohrleitung verbunden wird, wobei das freie Ende abgeschirmt wird, bevor der erste Bereich der Rohrleitung abgeschnitten wird, insbesondere abgeschirmt innerhalb einer restlichen Manschette, die am Ende einer vorherigen Durchführung des Verfahrens an dem nicht beseitigten Teilbereich (2.2) der Rohrleitung an Ort und Stelle gelassen worden ist.

7. Verfahren nach einem der vorangehenden Ansprüche,
wobei der Rest (20.2) der Manschette (20; 120), der nicht mit dem mit dem Gehäuse (10, 110) verbundenen Teilbereich (2.1) beseitigt wird, an diesem nicht beseitigten Teilbereich an Ort und Stelle gelassen wird, und wobei anschließend eine Durchführung des Verfahrens wiederholt wird, was dazu führt, diesen nicht beseitigten Teilbereich in zwei Teile zu zerschneiden.

8. Vorrichtung (1; 101) zum Abbau eines potentiell kontaminierten Rohrleitungssystems, die Folgendes aufweist:
- ein Abschirmgehäuse (10; 110), das dazu geeignet ist, in dichter Weise an eine Rohrleitung (2) des Rohrleitungssystems angesetzt zu werden, indem ein Freiraum (V) um diese Rohrleitung herum abgeschirmt wird, und
- eine Schneideinrichtung (31; 135) zum Abschneiden der Rohrleitung (2), die dazu geeignet ist, an der Rohrleitung angewendet zu werden, wobei sie sich beim Zerschneiden der Rohrleitung in dem Freiraum (V) befindet, und um die Rohrleitung in zwei trennbare Teilbereiche (2.1, 2.2) zu zerschneiden,
**dadurch gekennzeichnet,**
**dass** die Vorrichtung ferner Folgendes aufweist:
- eine Manschette (20; 120), die aus einem dichten Material besteht, insbesondere aus Vinyl, und die dazu geeignet ist, um die Rohrleitung (2) herum und angrenzend an das Gehäuse (10; 110) so angesetzt zu werden, dass ein Ende (21; 121) der Manschette in der Lage ist, hermetisch dicht an das Gehäuse befestigt zu werden, während die restliche Manschette in der Lage ist, einen Bereich (2B) der Rohrleitung abzuschirmen, der an den über das Gehäuse abgeschirmten Bereich (2A) angrenzt, und
- eine Quetscheinrichtung (60) zum Zusammenquetschen der Manschette (20; 120), die dazu geeignet ist, an die Manschette zwischen den beiden Teilbereichen (2.1, 2.2) so angesetzt zu werden, dass sie hermetisch dicht isoliert und das Trennen des Bereichs (20.1) der Manschette, der an das Gehäuse (10; 110) befestigt ist, von der restlichen Manschette ermöglicht.

9. Vorrichtung nach Anspruch 8,
wobei das Gehäuse (10; 110) mit einem Mantel (19; 119) versehen ist, der so angeordnet ist, dass er im Wesentlichen koaxial zur Rohrleitung (2) verläuft, wenn das Gehäuse an die Rohrleitung angesetzt ist, und um den herum das freie Ende (21; 121) der Manschette (20; 120) hermetisch dicht befestigt ist.

10. Vorrichtung nach einem der Ansprüche 8 oder 9,
**dadurch gekennzeichnet,**
**dass** die Vorrichtung (1; 101) ferner eine Absaugeinrichtung (40; 140) aufweist und dass das Gehäuse (10; 110) mit einer Anschlusseinrichtung (17; 117) zum Anschließen seines Freiraums (V) an diese Absaugeinrichtung versehen ist.

## Claims

1. Method for dismantling a potentially contaminated pipeline, in which
- around a first longitudinal part (2A) of a pipe (2) of the pipeline, there is fitted and fixed a housing (10; 110) in the inside of which a free volume (V) is confined around this first part of the pipe;
- around a second longitudinal part (2B) of the pipe (2), which is adjacent to the first part (2A) of the pipe, there is fitted a sleeve (20; 120) which is formed from an impermeable material, one end (21; 121) of which is fixed hermetically on the housing (10; 110) and in the inside of the remainder of which the second part of the pipe is confined,
- from the free volume (V), there is applied a cutting means (31; 135) on the first part (2A) of the pipe (2), until the pipe is cut into two distinct sections (2.1, 2.2),
- after having separated one (2.1) of the two sections, which is retained connected to the housing (10), relative to the other section (2.2) to which the second part (2B) of the pipe (2) belongs, a zone of the sleeve (20; 120) is constricted between these two sections until hermetic isolation of one end part (20.1) of the sleeve, connecting its constricted zone to its end (21; 121) fixed to the housing, relative to the remainder of the sleeve, and
- after having separated said end part (20.1) of the sleeve (20; 120) relative to the remainder of the sleeve, it is evacuated jointly with the section (2.1) connected to the housing (10; 110).

2. Method according to claim 1, in which, before separating the two sections (2.1, 2.2) from one another, the housing (10; 110) is moved along the pipe (2) in a direction opposite from the second part (2B) of the pipe so as to keep the free volume (V) confined around the section (2.1) which is evacuated subsequently.

3. Method according to one of the claims 1 and 2, in which, after having fitted and fixed the housing (10; 110) around the first part (2A) of the pipe (2), the free volume (V) is connected to an air-suctioning means (40; 140) which is actuated at least during the application of the cutting means (31; 135), right up to constriction of the sleeve (20; 120) inclusively.

4. Method according to any of the preceding claims, in which the cutting means (31) is introduced into the free volume (V) from the exterior of this free volume after having fitted the housing (10) around the first part (2A) of the pipe (2).

5. Method according to any of the claims 1 to 3, in which the cutting means (135) is put in place around the first part (2A) of the pipe (2) before or simultaneously with putting the housing (10) in place around this first part of the pipe so that at least the essential part of the cutting means is housed permanently in the free volume (V) while the housing (10) is fixed to the pipe.

6. Method according to any of the preceding claims, in which the first part (2A) of the pipe (2) is, opposite from the second part (2B) of the pipe, connected to one free end (2C) of the pipe, said free end is confined before cutting the first part of the pipe, confined in particular inside the remainder of a sleeve, left in place on the non-evacuated section (2.2) of the pipe at the end of a previous implementation of the method.

7. Method according to any of the preceding claims, in which the remainder (20.2) of the sleeve (20; 120), not evacuated with the section (2.1) connected to the housing (10, 110), is left in place on this non-evacuated section (2.2), and in that implementation of the method is repeated, resulting in cutting this non-evacuated section in two.

8. Device (1; 101) for dismantling a potentially contaminated pipeline, comprising:
- a confinement housing (10; 110) which is adapted to be fitted on a pipe (2) of the pipeline in a sealed manner whilst confining a free volume (V) around this pipe, and
- a means (31; 135) for cutting the pipe (2) which is adapted to be applied on the pipe, whilst being situated in the free volume (V) when it is cutting the pipe, and for cutting the pipe into two separable sections (2.1, 2.2),
**characterised in that** the device comprises furthermore:
- a sleeve (20; 120) which is formed from an impermeable material, in particular vinyl, and which is adapted in order to be fitted around the pipe (2) and adjacent to the housing (10; 110) such that one end (21; 121) of the sleeve is able to be fixed hermetically on the housing whilst the remainder of the sleeve is able to confine a part (2B) of the pipe adjacent to the part (2A) confined by the housing, and
- a means (60) for constricting the sleeve (20; 120) which is adapted to be fitted on the sleeve between the two sections (2.1, 2.2) so as to isolate hermetically and allow separation of, the part (20.1) of the sleeve, fixed to the housing (10; 110) relative to the remainder of the sleeve.

9. Device according to claim 8, in which the housing (10; 110) is provided with a ferrule (19; 119) which is housed in a manner substantially coaxial with the pipe (2) when the housing is fitted on the pipe and around which the free end (21; 121) of the sleeve (20; 120) is fixed hermetically.

10. Device according to one of the claims 8 or 9, **characterised in that** the device (1; 101) comprises furthermore a suctioning means (40; 140) and **in that** the housing (10; 110) is provided with a socket (17; 117) for connection of its free volume (V) to this suctioning means.
